# DEMANDE DE BREVET EUROPEEN

(11) **EP 4 624 248 A1**
(43) Date de publication de la demande: **01.10.2025**
(21) Numéro de dépôt: 25163938.1
(22) Date de dépôt: 14.03.2025
(51) Int. Cl.: B60N 2/68, B60N 2/50, B60N 2/18

(54) **SIÈGE SUSPENDU ET PROCÉDÉ D'ASSEMBLAGE D'UN TEL SIÈGE**

(30) Priorité: 29.03.2024 FR 2403332
(71) Demandeur: FAURECIA Sièges d'Automobile, 92000 Nanterre (FR)
(72) Inventeur: HAMMADI, Semir, 91160 SAULX LES CHARTREUX (FR); BRODERSEN, Cole Thomas, DAVENPORT, 52807 (US)
(74) Mandataire: Plasseraud IP

(57) **Abrégé**

La présente divulgation concerne un kit convenant pour l'obtention d'un siège suspendu comportant à l'état désassemblé :
/a/ un premier ensemble (E1) comportant un système de suspension comportant un châssis supérieur (30) et un châssis inférieur (31) entre lesquels est interposé un mécanisme et encore deux premiers supports latéraux (33, 34) ainsi que deux deuxièmes supports latéraux (35, 36) solidaires du châssis supérieur (30), ,
/b/ un deuxième ensemble (E2), autoportant présentant une assise (2) comprenant un châssis d'assise (20), s'étendant entre un bord arrière et un bord avant suivant une direction longitudinale X, et entre un premier bord latéral à un deuxième bord latéral suivant une direction transversale Y, comprenant un premier tube (21), avant destiné à être couplé aux premiers supports latéraux (33, 34) et un deuxième tube (22), arrière appartenant à l'assise s'étendant suivant la direction transversale Y destiné à être couplé aux deuxièmes supports latéraux (35, 36).

## Description

La présente divulgation est relative à un siège suspendu, et concerne encore un kit, à l'état désassemblé, pour l'obtention d'un tel siège.

La présente divulgation concerne encore un procédé d'assemblage d'un tel kit pour l'obtention d'un siège suspendu selon la présente divulgation.

### Domaine technique

Dans la présente divulgation, et de manière connue, un siège de véhicule peut comporter typiquement :
- une assise, qui s'étend suivant une direction X, depuis un bord avant et jusqu'à un bord arrière, et s'étend transversalement suivant une direction Y, depuis un premier bord latéral jusqu'à un deuxième bord latéral,
- un dossier qui s'étend en hauteur depuis le bord arrière de l'assise, suivant une direction Z, verticale, ou inclinée typiquement vers arrière, depuis un bord inférieur jusqu'à un bord supérieur du dossier, et s'étend transversalement suivant une direction Y, depuis un premier bord latéral, jusqu'à un deuxième bord latéral.

Le dossier peut être inclinable par rapport à l'assise, typiquement par un axe de pivot entre l'armature de dossier et l'armature d'assise, s'étendant suivant la direction transversale Y.

La position du siège dans le véhicule peut être typiquement réglée, suivant la direction X, par l'intermédiaire d'un système de glissière, typiquement avec une première glissière et une deuxième glissière reliant en parallèle l'assise au plancher du véhicule.

Ainsi, la ou chacune des deux glissières comporte deux parties de glissières avec une première partie de glissière solidaire du plancher et une partie de glissière solidaire de l'assise du siège, configurées pour coulisser l'une par rapport à l'autre suivant la direction X.

La présente divulgation s'intéresse toutefois plus particulièrement aux sièges suspendus, à savoir un siège qui comprend un système de suspension intercalé entre les glissières et le châssis d'assise, et tel qu'enseigné par exemple par US2010/0066142A1.

### Technique antérieure

Un tel système de suspension comprend un châssis supérieur solidarisé au châssis d'assise et un châssis inférieur, solidarisé aux glissières, et un mécanisme comportant un organe de suspension élastique, par exemple un système de bras en ciseaux et un ressort/amortisseur comme illustrés dans US2010/0066142A1 assurant l'amortissement de la partie suspendue, solidaire du châssis supérieur par rapport à la partie non suspendue solidaire du châssis inférieur ancré au plancher.

Le système de suspension du siège est avantageusement un équipement de confort qui permet de filtrer les irrégularités de la route en permettant un débattement de l'assise par rapport au plancher du véhicule, en particulier suivant une direction verticale. Le document US2010/0066142A1 enseigne encore une assise d'inclinaison réglable par rapport au châssis supérieur, et indépendamment du dossier du siège. Un coussin pneumatique disposé sur l'avant est disposé entre la partie inclinable de l'assise, et le châssis supérieur sur l'avant. Le gonflement du coussin pneumatique assure l'inclinaison vers l'arrière de l'assise par rapport au châssis supérieur.

Selon les constatations de la Demanderesse, une telle conception de siège suspendu peut être améliorée pour en faciliter son assemblage.

### Résumé

La présente divulgation vient améliorer la situation.

Selon un **premier aspect,** il est proposé un siège de véhicule automobile, suspendu, comprenant
- une assise comprenant un châssis d'assise, s'étendant entre un bord arrière et un bord avant suivant une direction longitudinale X, et entre un premier bord latéral à un deuxième bord latéral suivant une direction transversale Y, le châssis d'assise comportant deux flasques , gauche et droite, constitués par un premier flasque et un deuxième flasque qui sont maintenus écartés selon la direction transversale Y par des entretoises du châssis d'assise,
- un système de suspension intercalé entre le châssis d'assise et le plancher du véhicule, comportant un châssis supérieur et un châssis inférieur entre lesquels est interposé un mécanisme comportant un organe de suspension élastique configuré pour autoriser un débattement du châssis supérieur par rapport au châssis inférieur
- un dispositif de fixation de l'assise au système de suspension comprenant :
   -- au moins un tube solidaire de l'assise s'étendant suivant la direction transversale Y, comprenant en particulier un tube avant et/ou un tube arrière, ledit au moins un tube formant au moins en partie lesdites entretoises entre les deux flasques,
   -- au moins deux supports latéraux solidaires du châssis supérieur, positionnés à gauche et droite latéralement du châssis supérieur,
et un système de liaison mécanique reliant ledit au moins un tube et lesdits au moins deux supports latéraux configuré pour assurer une fixation de l'assise au système de suspension de manière indépendante des flasques.

De manière générale, le châssis supérieur peut comprendre un cadre comprenant, d'une part, deux longerons et deux traverses, avant et arrière, reliant les deux longerons entre eux, et d'autre part, lesdits au moins un deux supports latéraux, en particulier des premiers supports latéraux et des deuxièmes supports latéraux qui sont des supports fixés aux longerons, et saillants vers l'extérieur selon la direction transversale Y, par exemple constitués chacun d'une tôle d'un seul tenant conformée.

Selon un mode de réalisation, le système de liaison mécanique comprend au moins deux brides de fixation, droite et gauche, solidaires dudit au moins un tube, lesdits au moins deux brides de fixation étant saillantes sur le dessous du châssis d'assise, et configurées pour se fixer respectivement avec lesdits au moins deux supports latéraux, de préférence de manière amovible. En particulier, lesdites au moins deux brides de fixation peuvent être des tôles prédécoupées et pliées.

Selon un mode de réalisation, le siège peut comportant une fixation amovible entre les brides de fixation et lesdits supports latéraux comprenant tout ou partie des éléments suivants:
- des systèmes vis/écrou, comprenant au moins une vis traversant des alésages en regard entre, d'une part, une des brides de fixation, et l'un des supports latéraux, et/ou
- des boucles rigides, solidaires des supports latéraux, et des verrous configurés pour accrocher et verrouiller de préférence automatique, les boucles, le verrou comprenant un corps pourvu d'un fente de verrouillage, et un organe mobile de retenue, interne au corps, configuré pour accrocher la boucle lors d'une insertion de la boucle, dans ladite fente de verrouillage.

Selon un mode de réalisation, en particulier :
- ledit au moins un tube comprend un premier tube avant et un deuxième tube, arrière, solidaires de l'assise s'étendant suivant la direction transversale Y, en entretoisant les deux flasques,
- lesdits au moins deux supports latéraux comprennent deux premiers supports latéraux, avant, solidaires du châssis supérieur, positionnés à gauche et droite latéralement du châssis supérieur,
- lesdits au moins deux supports latéraux comprennent deux deuxièmes supports latéraux ,arrières solidaires du châssis supérieur, positionnés à gauche et à droite latéralement au châssis supérieur,
et dans lequel le système de liaison mécanique comprend deux premières brides de fixation, droite et gauche, solidaires dudit tube avant, fixées respectivement auxdits deux premiers support latéraux et deux deuxièmes brides de fixation, droite et gauche, solidaires dudit tube arrière, fixées respectivement auxdits deux deuxièmes supports latéraux.

Selon un autre mode de réalisation, ledit dispositif de fixation de l'assise au système de suspension comprend:
-- ledit au moins un tube solidaire de l'assise s'étendant suivant la direction transversale Y,
-- lesdits au moins deux supports latéraux solidaires du châssis supérieur, positionnés à gauche et droite latéralement du châssis supérieur,
et dans lequel ledit système de liaison mécanique comprend :
-- lesdits au moins deux supports latéraux comportent respectivement au niveau d'une paroi supérieure des parties de réception configurées pour la réception d'une portion inférieure dudit au moins un tube à droite et à gauche du châssis supérieur,
-- au moins deux premiers supports de fixation, gauche et droite, amovibles, fixés respectivement auxdits au moins deux supports latéraux, gauche et droite, comportant chacun deux pattes de fixation , fixées à l'un des deux supports latéraux, les deux pattes de fixation étant prolongées par une portion arquée, intermédiaire, formant une partie concave, inférieure de la portion arquée, ladite partie concave formant un logement supérieur pour une portion supérieure dudit au moins un tube, ledit au moins un tube étant maintenu entre deux couples support latéral support de fixation, respectivement à droite et gauche du châssis supérieur.

En particulier et selon cette autre mode de réalisation, le dispositif de fixation de l'assise au système de suspension peut comprendre :
-- un premier tube, avant et un deuxième tube, arrière, les tubes solidaires de l'assise s'étendant chacun suivant la direction transversale Y,
-- deux premiers supports latéraux solidaires du châssis supérieur, positionnés à gauche et droite latéralement du châssis supérieur, les deux premiers supports latéraux comportant respectivement au niveau d'une paroi supérieure des parties de réception configurées pour la réception d'une portion inférieure du premier tube, à droite et à gauche du châssis supérieur ,
-- deux premiers supports de fixation, gauche et droite, fixés respectivement aux premiers supports latéraux, gauche et droite, les deux premiers supports de fixation comportant chacun deux pattes de fixation, fixées à l'un des deux premiers supports latéraux, les deux pattes de fixation étant prolongées par une portion arquée, intermédiaire, formant une partie concave, inférieure de la portion arquée formant un logement supérieur pour une portion supérieure du premier tube, le premier tube étant maintenu entre deux couples premier support latéral et premier support de fixation, respectivement à droite et gauche du châssis supérieur,
-- deux deuxièmes supports latéraux solidaires du châssis supérieur, positionnés à gauche et à droite latéralement au châssis supérieur, les deux deuxièmes supports latéraux comportant respectivement au niveau d'une paroi supérieure des parties de réception configurées pour la réception d'une portion inférieure du deuxième tube, à droite et à gauche du châssis supérieur,
- deux deuxièmes supports de fixation, gauche et droite, fixés respectivement aux deuxièmes supports latéraux, droite et gauche, les deux deuxièmes supports de fixation, comportant chacun deux pattes de fixation, fixées à l'un des deuxièmes supports latéraux, les deux pattes de fixation étant prolongées par une portion arquée comportant une partie concave, inférieure de la portion arquée formant un logement supérieur pour une portion supérieure du deuxième tube, le deuxième tube étant maintenu entre deux couples deuxième support latéral et deuxième support de fixation, respectivement à droite et gauche du châssis supérieur.

Les caractéristiques exposées dans les paragraphes suivants peuvent, optionnellement, être mises en œuvre. Elles peuvent être mises en œuvre indépendamment les unes des autres ou en combinaison les unes avec les autres :
- lesdits au moins deux supports de fixation sont fixés audit au moins deux support latéraux par des organes de fixation tels que vis traversant des alésages des pattes de fixation et des alésages correspondants dans les supports latéraux, premiers supports latéraux et/ou deuxième support latéraux, en particulier les premiers supports de fixation sont fixés aux premiers supports latéraux et/ou les deuxièmes supports de fixation sont fixés aux deuxièmes supports latéraux, par des organes de fixation tels que vis traversant des alésages des pattes de fixation et des alésages correspondants dans les supports latéraux, premiers supports latéraux et/ou deuxième support latéraux ;
- le châssis d'assise comporte les deux flasques, gauche et droite, constitués par le premier flasque et le deuxième flasque qui sont maintenus écartés selon la direction transversale Y par les entretoises du châssis d'assise, et dans lequel le deuxième tube arrière constitue l'une des entretoises, au niveau de l'arrière du châssis ;
- l'assise est d'inclinaison réglable par rapport au châssis supérieur, par rotation des flasques autour de l'axe longitudinal du deuxième tube , arrière ;
- le deuxième tube est maintenu rigidement fixé entre les deux couples deuxième support latéral et deuxième support de fixation, respectivement à gauche et droite du châssis supérieur, sans possibilité de rotation du deuxième tube par rapport au châssis supérieur, et dans lequel une première extrémité du deuxième tube est montée pivotante dans un alésage du premier flasque et une deuxième extrémité est montée pivotante un alésage du deuxième flasque ;
- une première soudure est prévue entre le deuxième support de fixation, gauche, et le deuxième tube, ainsi qu'une deuxième soudure entre le deuxième support de fixation , droite, et le deuxième tube.

Selon un mode de réalisation :
- la première extrémité du deuxième tube traversant l'alésage du premier flasque comporte une première déformation radiale et une deuxième déformation radiale , de part et d'autre du premier flasque constituant des butées pour le flasque,
- la deuxième extrémité du deuxième tube traversant l'alésage du deuxième flasque comporte une première déformation radiale et une deuxième déformation radiale, de part et d'autre du deuxième flasque constituant des butées pour le flasque.

Selon un mode de réalisation :
- le premier flasque est monté pivotant par rapport au deuxième tube par l'intermédiaire d'une bague de glissement comportant un corps scellé sur le premier flasque, ainsi qu'un revêtement configuré pour glisser sur le deuxième tube,
- le deuxième flasque est monté pivotant par rapport au deuxième tube par l'intermédiaire 'd'une bague de glissement comportant un corps scellé sur le deuxième flasque, ainsi qu'un revêtement configuré pour glisser sur le deuxième tube.

Selon un mode de réalisation, le siège comprend un système de réglage de l'inclinaison de l'assise autour de l'axe longitudinal du deuxième tube, système de réglage comportant ledit premier tube, monté pivotant, autour de son axe longitudinal, par rapport aux couples premier support latéral et premier support de fixation, et respectivement à gauche et droite du châssis supérieur, le système de réglage comportant :
- un troisième tube formant une entretoise entre les deux flasques, le troisième tube monté pivotant par rapport auxdits flasques, premier et deuxième flasques,
- une première liaison ciseaux reliant le premier tube au troisième tube, le système de réglage comportant une première bielle, solidaire en rotation du premier tube et une deuxième bielle, articulée en pivot à la première bielle selon un premier axe transversal, au niveau d'une première extrémité de la deuxième bielle, la deuxième bielle étant liée en rotation avec le troisième tube au niveau d'une deuxième extrémité de la deuxième bielle,
- une deuxième liaison ciseaux reliant le premier tube au troisième tube comportant une troisième bielle, solidaire du premier tube et une quatrième bielle , articulée en pivot à la troisième bielle selon le premier axe transversal, au niveau d'une première extrémité, la quatrième bielle étant liée en rotation au troisième tube au niveau d'une deuxième extrémité de la quatrième bielle,
- un actionneur, assurant un déploiement des premières et deuxième liaison ciseaux, par entrainement en rotation du troisième tube par rapport au flasque et conjointement actionnement en rotation du premier tube par rapport aux couples premier support latéral et premier support de fixation.

Selon un mode de réalisation, l'actionneur est un mécanisme de réglage irréversible comportant :
- un support monté sur un flasque constitué par le premier flasque ou le deuxième flasque
- un organe d'entrée monté pivotant par rapport au support autour d'un axe de rotation, sollicité élastiquement vers une position de repos, déplaçable manuellement selon un premier sens, dans un premier secteur angulaire, et selon un second sens, dans un deuxième secteur angulaire système de réglage,
et dans lequel ledit mécanisme de réglage est configuré pour incliner l'assise vers l'arrière lorsque l'organe d'entrée est éloigné de sa position de repos selon un premier sens pour incliner l'assise vers l'avant lorsque l'organe d'entrée est éloigné de sa position de repos suivant le deuxième sens,
- un organe de sortie, monté pivotant autour de l'axe de rotation et un système d'entrainement et de blocage configuré pour assurer l'entraînement de l'organe de sortie par l'organe d'entrée lorsque l'organe d'entrée est déplacé en s'éloignant de sa position de repos selon le premier sens, ou encore selon le second sens et configuré pour bloquer la rotation de l'organe de sortie lorsque l'organe d'entrée retourne vers sa position de repos, et dans lequel l'organe de sortie comporte un pignon engrenant avec un secteur denté et couplé en rotation au troisième tube.

Éventuellement, deux coussinets sont montés entre le premier tube et les deux couples couple premier support latéral et premiers supports de fixation, respectivement à droite et gauche du châssis supérieur.

Selon un mode de réalisation les parties de réception des au moins deux supports latéraux configurées pour la réception d'une portion inférieure dudit au moins tube, à droite et à gauche du châssis supérieur comprennent des logements inférieurs recevant la portion inférieure du au moins un tube.

E en particulier
- les parties de réception des premiers supports latéraux configurées pour la réception d'une portion inférieure du premier tube, à droite et à gauche du châssis supérieur comprennent des logements inférieurs recevant la portion inférieure du premier tube et/ou
- les parties de réception des deuxièmes supports latéraux configurées pour la réception d'une portion inférieure du deuxième tube, à droite et à gauche du châssis supérieur comprennent des logements inférieurs recevant la portion inférieure du deuxième tube.

Selon un **deuxième aspect,** la présente divulgation est relative à un kit convenant pour l'obtention d'un siège selon la présente divulgation comportant à l'état désassemblé :
/a/ un premier ensemble comportant un système de suspension comportant un châssis supérieur et un châssis inférieur entre lesquels est interposé un mécanisme comportant un organe de suspension élastique et au moins deux supports latéraux solidaires du châssis supérieur, positionnés à droite et gauche latéralement au châssis supérieur, et en particulier deux premiers supports avants, et deuxièmes supports latéraux, arrières ,
/b/ un deuxième ensemble, autoportant présentant une assise comprenant un châssis d'assise, s'étendant entre un bord arrière et un bord avant suivant une direction longitudinale X, et entre un premier bord latéral à un deuxième bord latéral suivant une direction transversale Y, comprenant au moins un tube appartenant à l'assisse s'étendant suivant la direction transversale Y, entretoisant deux flasques dudit châssis supérieur, et en particulier un tube avant et un tube arrière et un système de liaison mécanique configuré pour relier ledit au moins un tube et lesdits au moins deux supports latéraux, configuré pour assurer une fixation de l'assise au système de suspension de manière indépendante des flasques .

Selon un mode de réalisation, ledit système de liaison mécanique comprend au moins deux brides de fixation, droite et gauche, solidaires dudit au moins un tube lesdits au moins deux brides de fixation étant saillantes sur le dessous du châssis d'assise, et configurées pour se fixer respectivement avec lesdits au moins deux supports latéraux, et en particulier deux premières brides de fixation, droite et gauche, avant, configurées pour se fixer respectivement sur les .premiers supports latéraux, droite et gauche, et deux deuxièmes brides de fixation, droite et gauche, arrière, configurées pour se fixer respectivement sur les deuxièmes supports latéraux, droite et gauche.

Selon un autre mode de réalisation, ledit système de liaison mécanique comprend :
/c/ au moins deux supports de fixation configurés pour être fixés respectivement aux supports latéraux, droite et gauche, les deux supports de fixation, comportant chacun deux pattes de fixation, destinées à être fixées à l'un des supports latéraux ;prolongeant une portion arquée formant une partie concave, inférieure formant un logement supérieur pour une portion supérieure du premier tube , dit au moins un tube étant destiné à être maintenu entre deux couples support latéral et support de fixation, respectivement à droite et gauche du châssis supérieur.

Selon ledit autre mode de réalisation du deuxième aspect :
- lesdits au moins deux supports latéraux du premier ensemble peuvent comporter deux premiers supports latéraux solidaires du châssis supérieur, positionnés à droite et gauche latéralement au châssis supérieur, les deux premiers supports latéraux comportant au niveau d'une paroi supérieure respectivement des parties de réception destinées à recevoir un tube, ainsi que deux deuxièmes supports latéraux solidaires du châssis supérieur, positionnés à droite et à gauche latéralement au châssis supérieur, les deux deuxièmes supports comportant au niveau d'une paroi supérieure respectivement des parties de réception destinées à recevoir un tube,
- ledit au moins un tube du deuxième ensemble comporte un premier tube, avant et un deuxième tube, arrière-appartenant à l'assisse s'étendant suivant la direction transversale Y,
- lesdits au moins deux supports de fixation comportent :
   /c1/ deux premiers supports de fixation configurés pour être fixés respectivement aux premiers supports latéraux , droite et gauche, les deux premiers supports de fixation , comportant chacun deux pattes de fixation, destinées à être fixées à un premier support latéral ;prolongeant une portion arquée, une partie concave, inférieure de la portion arquée formant un logement supérieur pour une portion supérieure du premier tube, le premier tube étant destiné à être maintenu entre deux couples premier support latéral et premier support de fixation, respectivement à droite et gauche du châssis supérieur,
   /c2/ deux deuxièmes supports de fixation, configurés pour être fixés respectivement aux deuxièmes supports latéraux, droite et gauche, les deux deuxièmes supports de fixation, comportant chacun deux pattes de fixation, destinées à être fixées à un deuxième support latéral, les deux pattes de fixation prolongeant une portion arquée, une partie concave, inférieure de la portion arquée formant un logement supérieur pour une portion supérieure du deuxième tube, le deuxième tube étant destiné à être maintenu entre deux couples deuxième support latéral et deuxième support de fixation, respectivement à droite et gauche du châssis supérieur.

Selon un **troisième aspect,** la présente divulgation est relative à un procédé d'assemblage d'un siège à partir d'un kit selon la présente divulgation comprenant :
- /A/ positionnement des premières brides de fixation du premier tube de l'assise du deuxième ensemble contre les premiers supports latéraux du système de suspension du premier ensemble ,
- /B/ positionnement des deuxièmes brides de fixation du deuxième tube de l'assise du deuxième ensemble contre les deuxièmes supports latéraux du système de suspension du premier ensemble,
-/C/ assemblage du premier ensemble et du deuxième ensemble par solidarisation des premières brides de fixation sur les premiers supports latéraux et par solidarisation des deuxièmes brides de fixation sur les deuxièmes supports latéraux .

Selon un quatrième aspect, la présente divulgation concerne encore un procédé d'assemblage d'un siège selon la présente divulgation à partir d'un kit selon la présente divulgation comprenant :
- /A/ positionnement du premier tube de l'assise du deuxième ensemble contre les parties de réception des premiers supports latéraux du système de suspension du premier ensemble, les parties de réception recevant une portion inférieure du premier tube,
- /B/ positionnement du deuxième tube de l'assise du deuxième ensemble contre les parties de réception des deuxièmes supports latéraux du système de suspension du premier ensemble, les parties de réception recevant une portion inférieure du deuxième tube ,
-/C/ assemblage du premier ensemble et du deuxième ensemble par la mise en place :
- /C1/ des deux premiers supports de fixation, fixés respectivement aux premiers supports latéraux, gauche et droite, les deux premiers supports de fixation, comportant chacun deux pattes de fixation, fixées à un premier support latéral ; les deux pattes prolongeant la portion arquée, une partie concave, inférieure de la portion arquée formant un logement supérieur pour une portion supérieure du premier tube, le premier tube étant maintenu entre deux couples premier support latéral et premier support de fixation, respectivement à droite et gauche du châssis supérieur,
- /C2/ des deux deuxièmes supports de fixation, fixés respectivement aux deuxièmes supports latéraux, gauche et droite, les deux deuxième supports de fixation, comportant chacun deux pattes de fixation fixées à un deuxième support latéral prolongeant une portion arquée, une partie concave, inférieure de la portion arquée formant un logement supérieur pour une portion supérieure du deuxième tube, le deuxième tube étant maintenu entre deux couples deuxième support latéral et deuxième support de fixation, respectivement à droite et gauche du châssis supérieur.

Selon un mode de réalisation du procédé, l'assemblage du premier ensemble et du deuxième ensemble comporte successivement à /C2/ la mise en œuvre de soudures entre les deuxièmes supports de fixation et le deuxième tube et/ou entre les premiers supports de fixation et le premier tube.

### Brève description des dessins

D'autres caractéristiques, détails et avantages apparaîtront à la lecture de la description détaillée ci-après, et à l'analyse des dessins annexés, sur lesquels :
**Fig. 1**

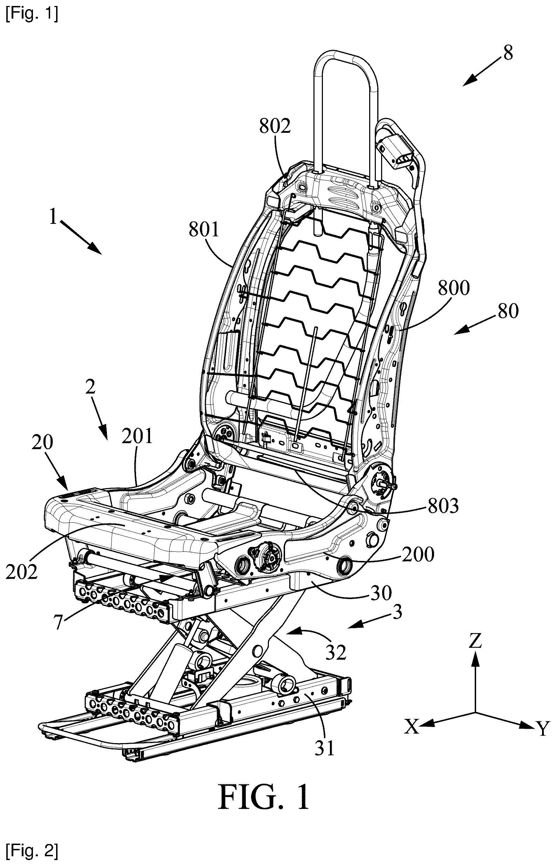

   [Fig. 1] est une vue d'un siège de véhicule selon un mode de réalisation de la présente divulgation comprenant un premier ensemble comprenant, d'une part, un système de suspension comprenant un châssis supérieur et un châssis inférieur, ainsi qu'un mécanisme interposé entre le châssis supérieur et le châssis inférieur, et d'autre part, un deuxième ensemble comprenant une assise et un dossier, le premier ensemble et le deuxième ensemble étant assemblés par un dispositif de fixation de l'assise au un système de suspension comprenant un premier tube et un deuxième tube solidaires de l'assise appartenant au deuxième ensemble, ainsi que des premiers supports latéraux solidaires du châssis supérieur recevant le premier tube, et des deuxièmes supports latéraux solidaires du châssis supérieur recevant le deuxième tube, les premiers et deuxièmes supports latéraux appartenant au premier ensemble.
**Fig. 2**

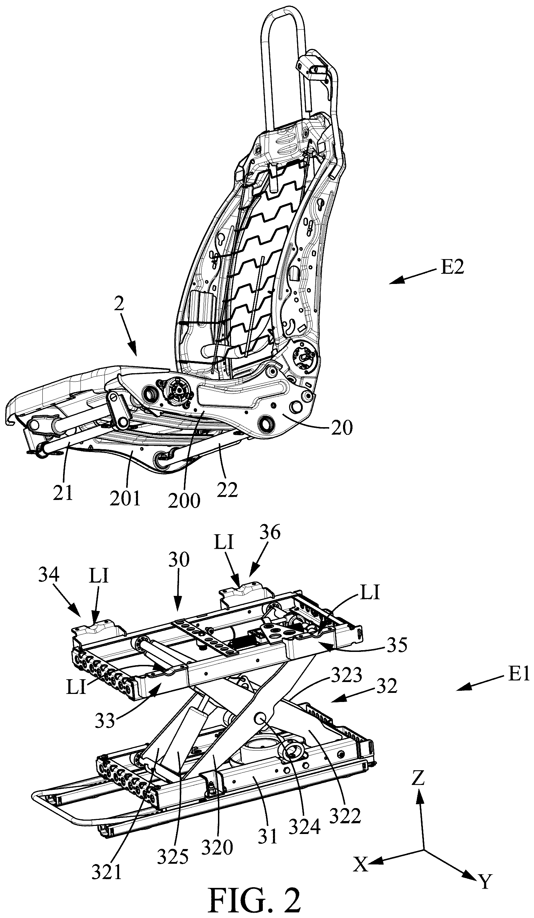

   [Fig. 2] est une vue du siège à l'état désassemblé, le premier ensemble alors désolidarisé du deuxième ensemble
**Fig. 3**

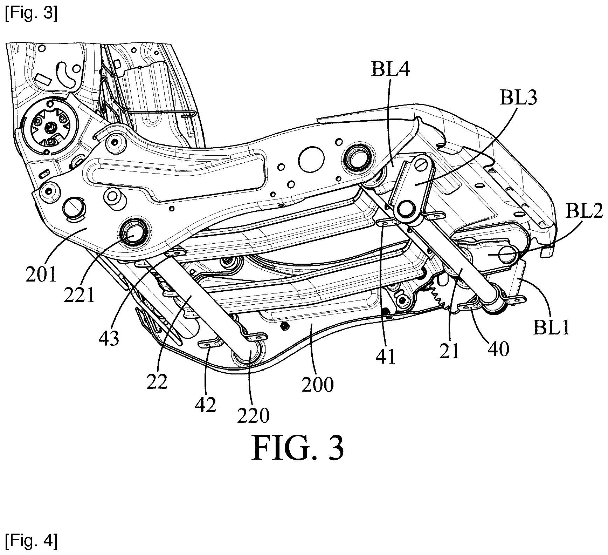

   [Fig. 3] montre est une vue en perspective de dessous du deuxième ensemble, illustrant le premier tube, qui est lié au châssis d'assise par deux liaisons ciseaux d'un système de réglage de l'inclinaison de l'assise, et illustrant le deuxième tube agencé transversalement en entretoise du premier et second flasques du châssis d'assise, articulé en pivot par rapport aux flasques aux extrémités du deuxième tube, via des bagues de glissement.
**Fig. 4**

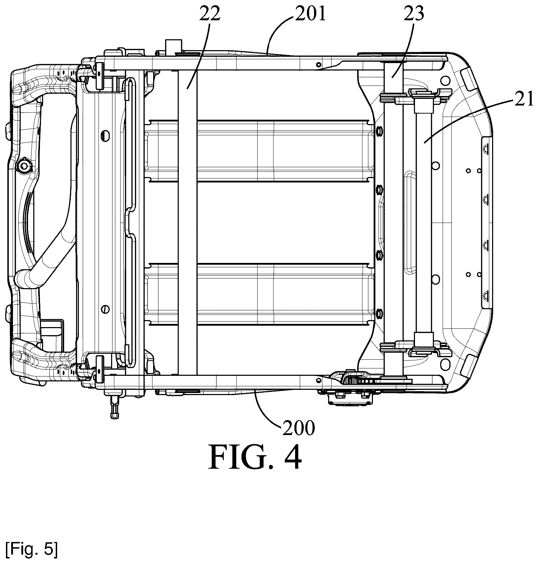

   [Fig. 4] est une vue de dessous du deuxième ensemble.
**Fig. 5**

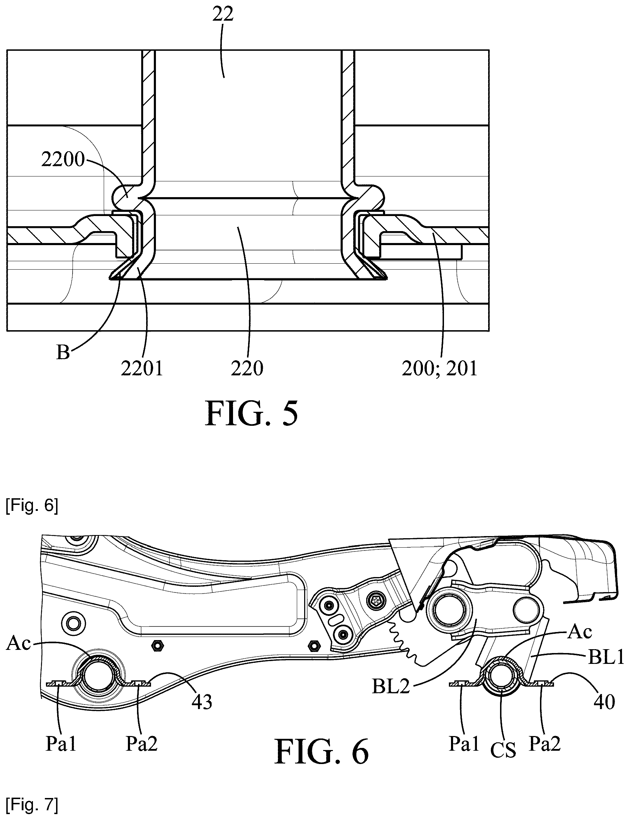

   [Fig. 5] est une vue de coupe selon un plan passant par l'axe du deuxième tube, illustrant une extrémité du tube articulée en pivot par rapport aux flasques via une bague de glissement entre l'extrémité du tube et le flasque,
**Fig. 6**
   [Fig. 6] est une vue de coupe selon un plan vertical, illustrant le deuxième tube et le deuxième support de fixation associé, ainsi que le premier tube et le premier support de fixation, ainsi qu'un coussinet sous forme d'une bague palier interposé entre le premier tube et chaque couple premier support latéral/premier support de fixation.
**Fig. 7**

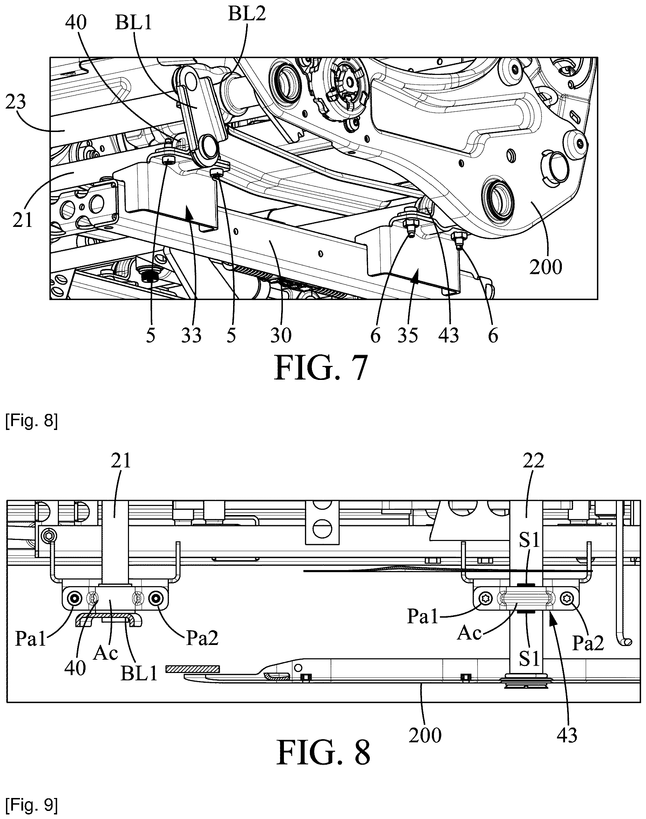

   [Fig. 7] est une vue en perspective illustrant l'assemblage du premier ensemble au deuxième ensemble par des organes de fixation, tels que des vis.
**Fig. 8**
   [Fig. 8] montre est une vue de dessus qui illustre un premier support de fixation maintenant le premier tube sur un premier support latéral, et un deuxième support de fixation maintenant le deuxième tube sur un deuxième support latéral, le deuxième support de fixation étant soudé au deuxième tube via des soudures entre le tube et la portion arquée du deuxième support de fixation, et alors que le premier tube est monté libre de rotation autour de son axe par rapport au couple premier support de fixation/premier support latéral, via un coussinet favorisant le glissement.
**Fig. 9**

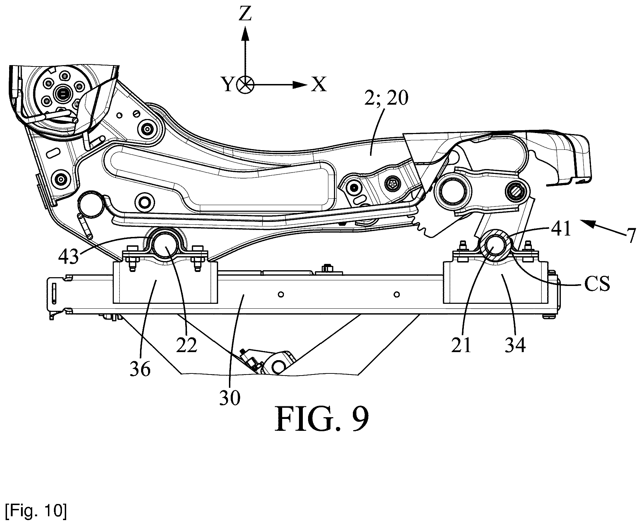

   [Fig. 9] est une vue de coupe du siège selon un plan de coupe vertical, perpendiculaire aux tubes, premier et deuxième tubes.
**Fig. 10**

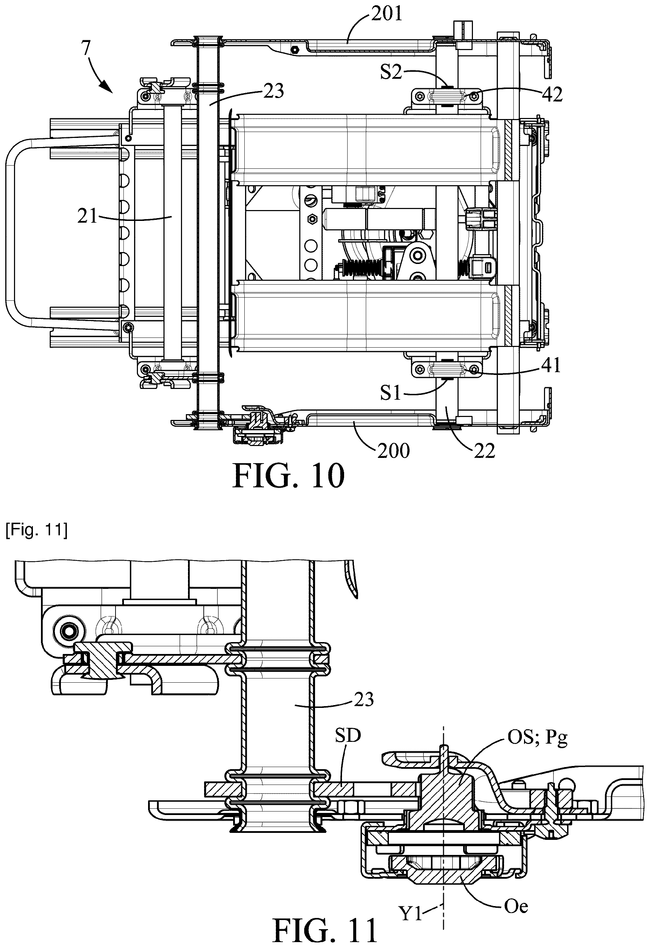

   [Fig. 10] est une vue de coupe de l'assemblage, et selon un plan de coupe horizontal passant par un troisième tube, solidaire en rotation de troisième bielle et quatrième bielle appartenant à la première et à la deuxième liaison ciseaux, le troisième tube articulé aux flasques à ses extrémités, un mécanisme de réglage irréversible, fixé sur le premier flasque comprenant un organe de sortie dont la denture engrène avec un secteur denté solidaire en rotation du troisième tube.
**Fig. 11**
   [Fig. 11] est une vue de coupe selon la figure 10, côté mécanisme de réglage irréversible, illustrant en détail l'engrenage entre l'organe de sortie du mécanisme de réglage irréversible et le secteur denté couplé en rotation au troisième tube.
**Fig. 12**

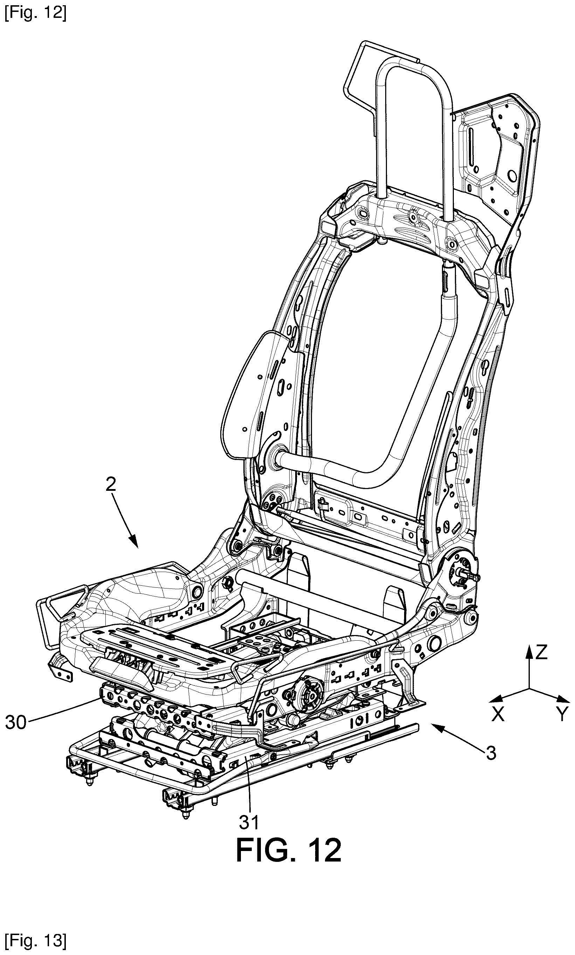

   [Fig. 12] est une vue d'un siège de véhicule suspendu selon un deuxième mode de réalisation.
**Fig. 13**

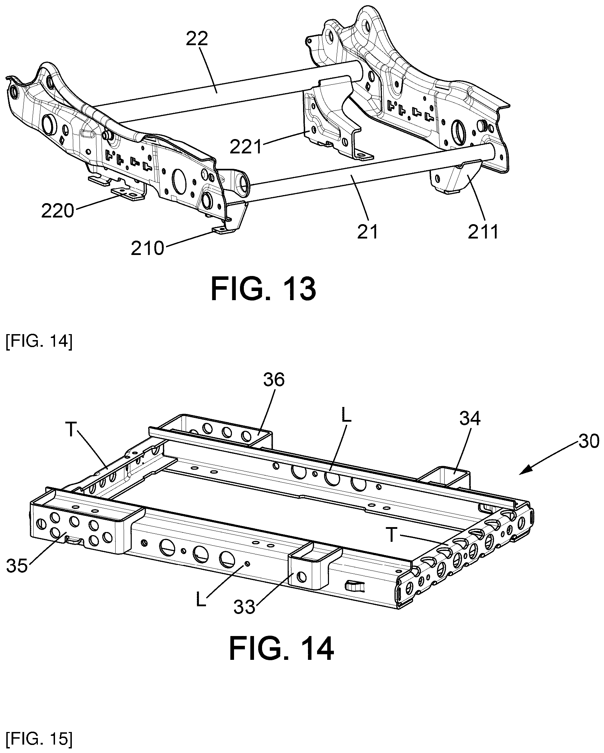

   [Fig. 13] est une vue de détail d'un châssis d'assise du siège selon la figure 12, comprenant deux flasques entretoisés par un premier tube, avant et un deuxième tube, arrière, et un système de liaison mécanique comprenant des premières brides de fixation, droite et gauche, solidaires et soudés sur le tube avant, et des deuxièmes brides de fixation, droite et gauche, solidaires et soudées sur le tube arrière.
**Fig. 14**
   [Fig. 14] est une vue du châssis supérieur du dispositif de suspension de la figure 12, le châssis supérieur sous forme d'un cadre comprenant deux longerons s'étendant suivant la direction longitudinale et des traverses s'étendant suivant la direction transversale, le système de liaison mécanique comprenant deux premiers supports latéraux, avant, saillants extérieurement suivant la direction transversale, destinés pour la fixation des premières brides de fixation, et deux deuxièmes supports latéraux, arrière saillant extérieurement, suivant la direction transversale, destinés pour la fixation des deuxièmes brides de fixation.
**Fig. 15**

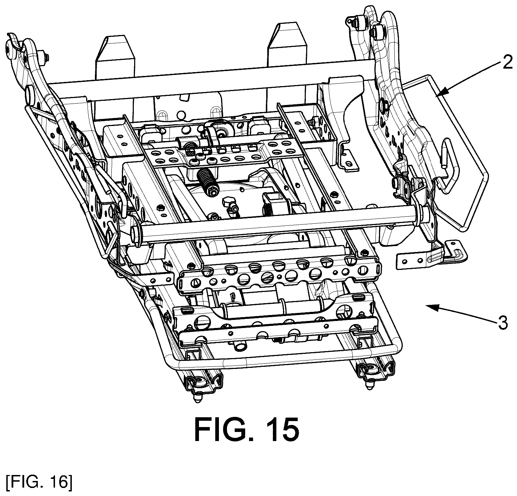

   [Fig. 15] est une vue de l'assemblage entre le châssis d'assise et le système de suspension du siège selon la figure 12, par vissage des brides de fixation droite et (respectivement premières et deuxièmes) aux supports latéraux (respectivement premiers et deuxièmes)
**Fig. 16**

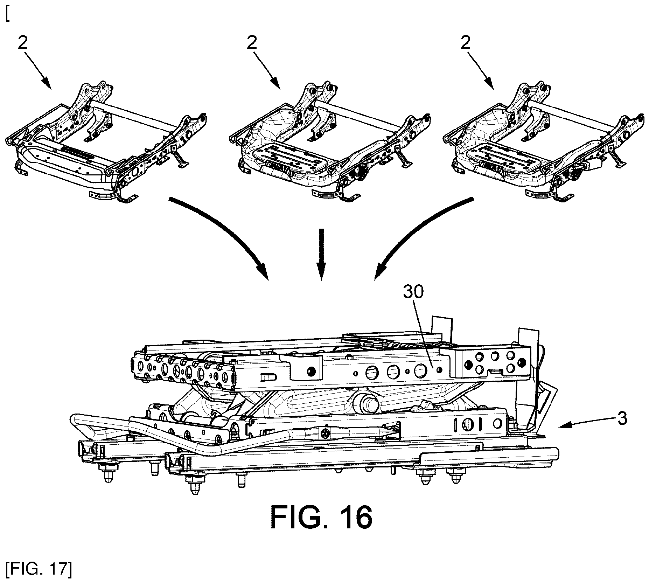

   [Fig. 16] est vue schématique illustrant un intérêt du système de liaison mécanique assurant une fixation du siège par l'intermédiaire dudit au moins un tube, en particulier par le tube avant et le tube arrière, et qui est avantageux en ce qu'il constitue une solution universelle, indépendante des flasques, autorisant l'assemblage de diverses conceptions d'assise et en particulier un châssis d'assise dépourvu de rehausse (illustré à gauche) à ou encore un châssis d'assise comportant un mécanisme de réglage manuel (au milieu) de l'inclinaison d'assise ou encore un mécanisme motorisé (à droite).
**Fig. 17**

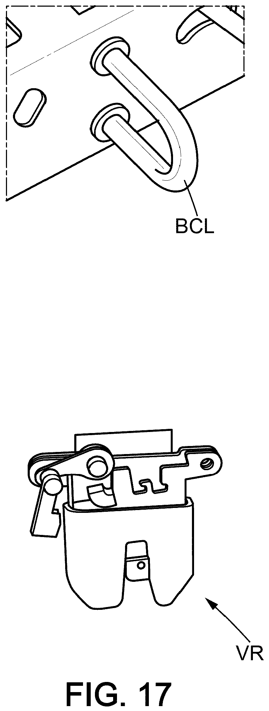

   [Fig. 17] est vue d'une fixation alternative entre les supports latéraux du châssis supérieur du système de suspension et des brides de fixation comportant une boucle de fixation rigide, et un verrou comprenant un corps comportant une fente de verrouillage et un organe de retenu.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aussi la présente divulgation est relative à un siège suspendu de véhicule automobile comprenant une assise 2 comprenant un châssis d'assise 20, s'étendant entre un bord arrière et un bord avant suivant une direction longitudinale X, et entre un premier bord latéral à un deuxième bord latéral suivant une direction transversale Y.

Le châssis d'assise 20 peut comprendre un premier flasque 200, disposé à niveau du premier bord latéral et un deuxième flasque 201, disposé au niveau du deuxième bord latéral. Le premier flasque 200 et le deuxième flasque 201 s'étendent typiquement suivant deux plans verticaux, parallèle au plan XZ, et sont maintenus par des entretoises, s'étendant suivant la direction Y. Une traverse 202 peut relier les deux flasques 200, 201 au niveau du bord avant de l'assise 2.

De manière générale, et comme illustré à titre indicatif à la figure 1, le siège comprend un dossier 8 comprenant un châssis de dossier 80, fixé sur le châssis d'assise 20, au niveau du bord arrière de l'assise, et en particulier aux premier et deuxième flasques 200, 201 du châssis d'assise 20. Typiquement le siège, le siège peut comprendre un mécanisme de réglage de l'inclinaison du châssis de dossier 80 par rapport au châssis du dossier, suivant un axe articulation transversale entre le châssis de dossier et le châssis d'assise, s'étendant suivant la direction Y

Le châssis de dossier 8 peut comprendre typiquement deux flasques 800, 801 (premier et deuxième) disposés respectivement au niveau d'un premier bord latéral et un deuxième bord latéral du châssis de dossier 80, les flasques formant des montants, ainsi qu'en particulier une traverse supérieure 802, reliant les deux flasques 800, 801, à leur extrémité supérieure, et/ou traverse inférieure 803 reliant les deux flasques 800, 801, à leur extrémité inférieure.

Le châssis d'assise 20 est destiné à recevoir une garniture d'assise, avec un matelassage typiquement en mousse expansée, ou encore sous forme d'un enchevêtrement en trois dimensions de fibres plastiques, formant des boucles soudées en elles. Le matelassage apporte le moelleux et le confort de l'assise du siège. Le châssis de dossier 80 est destiné à recevoir une garniture de dossier, avec un matelassage typiquement en mousse expansée, ou encore sous forme d'un enchevêtrement en trois dimensions de fibres plastiques, qui apporte le moelleux et le confort du dossier de l'assise.

Le siège selon la présente divulgation comprend encore un système de suspension 3 intercalé entre le châssis d'assise et le plancher du véhicule, comportant un châssis supérieur 30 et un châssis inférieur 31 entre lesquels est interposé un mécanisme 32 comportant un organe de suspension élastique. Le mécanisme 32 est configuré pour autoriser un débattement du châssis supérieur 30 par rapport au châssis inférieur 31, et par exemple dans l'objectif de filtrer les irrégularités de la route.

Le mécanisme peut comprendre un système de bras en ciseaux, comprenant un premier bras 320 (resp. 321) et un deuxième bras 322 (resp. 323), articulés l'un à l'autre suivant un axe d'articulation 324, s'étendant suivant la direction Y.

Le premier bras 320 (resp 321), peut être articulé à son extrémité supérieure du châssis supérieur 30, par exemple en position arrière (suivant la direction X) sur le châssis supérieur et présenter à son extrémité supérieure un organe de roulement, tel qu'un galet, monté roulant le long d'un chemin de roulement du châssis supérieur 30. Le premier bras présente à son extrémité inférieure un organe de roulement tel qu'un galet monté roulant le long d'un chemin de roulement du châssis inférieur 31.

Le deuxième bras 322 (resp 323), peut être articulé à son extrémité supérieure du châssis supérieur 30, par exemple en position avant (suivant la direction X) sur le châssis supérieur et présenter à son extrémité supérieure un organe de roulement, monté roulant le long d'un chemin de roulement du châssis supérieur 30. Le deuxième bras 322, 323peut être articulé suivant un axe d'articulation transversal au châssis inférieur 31, sur une partie arrière de celui-ci.

Dans tel mécanisme, et lors d'un débattement vertical de l'assise vers le bas, le mécanisme guide le rapprochement du châssis supérieur 50 par rapport au châssis inférieur, les galets 57 des bras (54 ou 55) s'éloignant des axes d'articulation 58, 59. Les bras 54, 55 s'écartent ainsi, rappelés par la force de rappel de l'organe de suspension élastique 53, constitués ici par un ou plusieurs ressorts montés en extension entre les deux bras 54,55.

Dans tel mécanisme, et lors d'un débattement vertical de l'assise vers le bas, le mécanisme guide le rapprochement du châssis supérieur 30 par rapport au châssis inférieur 31, les galets aux extrémités supérieures des bras 320, 322 s'éloignent. Les bras 3200, 322 (resp 321, 322) s'écartent ainsi, rappelés par la force de rappel de rappel de l'organe de suspension élastique 325, constitués ici par un ou plusieurs organes élastiques 325 montés entre les bras. L'organe élastique peut être par exemple constitué par un vérin pneumatique, ou encore un ressort métallique.

Le châssis inférieur 31 peut être typiquement solidaire du plancher du véhicule via des glissières. Les glissières typiquement au nombre de deux sont orientées suivant la direction X. Chaque glissière comprend un membre inférieur, fixe, typiquement un profilé fixe par rapport au plancher et un membre supérieur mobile, fixé au châssis supérieur 31, typiquement sous forme d'un profilé mobile, configuré pour coulisser le long du profilé fixe. Le profilé mobile supérieur est typiquement un profilé mâle, alors que le profilé fixe, inférieur, est typiquement un profilé femelle, à savoir qu'il reçoit intérieurement le profilé mâle. Un système de réglage et de verrouillage des glissières permet typiquement d'assurer un réglage de la position du membre supérieur par rapport au membre inférieur de la glissière, au moins suivant plusieurs positions discrètes de réglage.

### Premier mode de réalisation (figures 1 à 11)

Selon un premier mode de réalisation illustré à titre d'exemple des figures 1 à 12 , le siège 1 comprend encore .un dispositif de fixation de l'assise au système de suspension 3 comprenant :
- un premier tube 21, avant et un deuxième tube 22 ; arrière-solidaires de l'assise 2 s'étendant suivant la direction transversale Y,
- deux premiers supports latéraux 33,34 solidaires du châssis supérieur 30, positionnés à gauche et droite latéralement du châssis supérieur 20, au niveau d'une portion avant du châssis supérieur 30, les deux premiers supports latéraux 33, 34 comportant respectivement au niveau d'une paroi supérieure des parties de réception configurées pour la réception d'une portion inférieure du premier tube 21, à droite et à gauche du châssis supérieur 30,
- deux premiers supports de fixation 40, 41, droite et gauche, fixés respectivement aux premiers supports latéraux 33, 34, gauche et droite, les deux premiers supports de fixation 40, 41 comportant chacun deux pattes de fixation Pa1, Pa, fixées à l'un des premiers supports latéraux, les deux pattes de fixation étant prolongées par une portion arquée Ac intermédiaire, formant une partie concave, inférieure de la portion arquée. La partie concave forme un logement supérieur Ls pour une portion supérieure du premier tube, le premier tube étant maintenu pincé entre deux couples premier support latéral 33 ;34 et premier support de fixation 40 ; 41, respectivement à droite et gauche du châssis supérieur,
-- deux deuxièmes supports latéraux 35, 36 solidaires du châssis supérieur 30, positionnés, à gauche et à droite, latéralement au châssis supérieur 30, au niveau d'une portion arrière du châssis supérieur 30, les deux deuxièmes supports latéraux comportant respectivement au niveau d'une paroi supérieure des parties de réception configurées pour la réception d'une portion inférieure du deuxième tube, à droite et à gauche du châssis supérieur,
- deux deuxièmes supports de fixation, droite et gauche, fixés respectivement aux deuxièmes supports latéraux 42, 43, droite et gauche, les deux deuxièmes supports de fixation, comportant chacun deux pattes de fixation Pa1, Pa2, fixées à l'un de's deux deuxièmes supports latéraux, les deux pattes de fixation Pa1, Pa2 étant prolongées par une portion arquée Ac comportant une partie concave, inférieure de la portion arquée formant un logement supérieur Ls pour une portion supérieure du deuxième tube 22, le deuxième tube étant maintenu entre deux couples deuxième support latéral 35, 36 et deuxième support de fixation 42, 43, respectivement à droite et gauche du châssis supérieur 30.

Selon un mode de réalisation, les premiers supports de fixation 40, 41 sont fixés aux premiers supports latéraux 33, 34 et/ou les deuxièmes supports de fixation 42, 43 sont fixés aux deuxièmes supports latéraux 35, 36, par des organes de fixation 5,6 tels que vis traversant des alésages les pattes de fixation Pa1, Pa2 et des alésages correspondant dans les supports latéraux, premiers supports latéraux et/ou deuxième support latéraux. Dès, lors chaque couple support latéral (premier ou deuxième) et support de fixation (premier ou deuxième) comporte de paire d'orifices pour les deux organes de fixation. Un premier organe de fixation traverse la première patte Pa1 du support de fixation et un orifice du support latéral en regard, et un deuxième organe de fixation traverse la première patte Pa2 du support de fixation et un orifice du support latéral en regard.

Sur la figure 7, à titre d'exemple on remarque que les premiers supports de fixation présentant des orifices taraudés. Les vis sont alors insérées par le dessous, coopérant par vissage avec le premier support de fixation 23, jusqu'à la tête de la vis viennent en butée contre une face inférieure du premier support latéral.

Au contraire, et s'agissant des deuxièmes supports de fixation, à titre d'exemple, les vis sont insérées par le dessus coopérant au vissage avec un écrou, jusqu'à la tête de vis appuie sur le premier support de fixation, et que l'écrou appuie contre une face inférieure du deuxième support latéral.

De manière notable, le premier tube 21 peut être maintenu pincé entre les premiers supports latéraux 33, 34, gauche et droite, et les premiers supports de fixation 40, 41, gauche et droite, de manière fixe, ou alternativement le premier tube 21 peut être configuré pivotant par rapport aux premiers supports latéraux/premiers supports de fixation, via des coussinets ou des bagues paliers, favorisant le glissement.

De manière notable, le deuxième tube 22 peut être maintenu pincé entre les premiers deuxièmes latéraux 35, 36, gauche et droite, et les deuxièmes supports de fixation 42, 43, droite et gauche, de manière fixe, ou alternativement le deuxième tube 22 pivotant par rapport aux deuxièmes supports via des coussinets favorisant le glissement.

Un tel dispositif de fixation de l'assise au système de suspension 3 permet avantageusement un assemblage du système de suspension 3 appartenant à un premier ensemble E1, au deuxième ensemble E2 autoportant, le deuxième ensemble E2 comportant l'assise 2, y compris le châssis d'assise 20 et les premiers et deuxièmes tubes 21, 23, voire typiquement le dossier 3 du siège.

Aussi, la présente divulgation concerne encore un kit convenant pour l'obtention d'un siège suspendu comportant à l'état désassemblé :
/a/ un premier ensemble E1 comportant un système de suspension comportant un châssis supérieur 30 et un châssis inférieur 31 entre lesquels est interposé un mécanisme 32 comportant un organe de suspension élastique 325, ainsi que deux premiers supports latéraux 33, 34 solidaires du châssis supérieur 30, positionnés à gauche et droite latéralement au châssis supérieur 3, les deux premiers supports 33, 34 comportant au niveau d'une paroi supérieure respectivement des parties de réception destinées à recevoir un tube, ainsi que deux deuxièmes supports latéraux 35, 36 solidaires du châssis supérieur, positionnés à gauche et à droite latéralement au châssis supérieur 30, les deux deuxièmes supports comportant au niveau d'une paroi supérieure respectivement des parties de réception destinée à recevoir un tube
/b/ un deuxième ensemble E2, autoportant présentant une assise 2 comprenant un châssis d'assise 20, s'étendant entre un bord arrière et un bord avant suivant une direction longitudinale X, et entre un premier bord latéral à un deuxième bord latéral suivant une direction transversale Y, comprenant un premier tube 21, avant et un deuxième tube 22, arrière, les tubes appartenant à l'assisse s'étendant chacun suivant la direction transversale Y,
/c1/ deux premiers supports de fixation 40,41 configurés pour être fixés respectivement aux premiers supports latéraux 33,34, gauche et droite, les deux premiers supports de fixation, comportant chacun deux pattes de fixation Pa1, Pa2,
destinée à être fixées à un premier support latéral ;prolongeant une portion arquée Ac, une partie concave, inférieure de la portion arquée formant un logement supérieur Ls pour une portion supérieure du premier tube 21, le premier tube 21 étant destiné à être maintenu entre deux couples premier support latéral et premier support de fixation, respectivement à droite et gauche du châssis supérieur,
/c2/ deux deuxièmes supports de fixation 42, 43, configurés pour être fixés respectivement aux deuxièmes supports latéraux 35,36, gauche et droite, les deux deuxièmes supports de fixation, comportant chacun deux pattes de fixation Pa1, Pa2, destinées à être fixées à un deuxième support latéral, les deux pattes de fixation prolongeant une portion arquée Ac, une partie concave, inférieure de la portion arquée formant un logement supérieur pour une portion supérieure du deuxième tube, le deuxième tube 22 étant destiné à être maintenu entre deux couples deuxième support latéral et deuxième support de fixation, respectivement à droite et gauche du châssis supérieur.

En particulier le premier ensemble E1 et le deuxième ensemble E2 peuvent par exemple être fabriqués sur des sites de production distincts et être assemblés selon le procédé d'assemblage ci-après décrit.

Aussi la présente divulgation concerne encore un procédé d'assemblage d'un siège selon la présente divulgation à partir d'un kit selon la présente divulgation ;

Ce procédé d'assemblage comprend les étapes suivantes:
- /A/ positionnement du premier tube 21 de l'assise 2 du premier deuxième E2 contre les parties de réception des premiers supports latéraux 33,34 du système de suspension du premier ensemble E1, les parties de réception recevant une portion inférieure du premier tube 21,
- /B/ positionnement du deuxième tube 22 de l'assise du deuxième ensemble E2 contre les parties de réception des deuxièmes supports latéraux 35, 36 du système de suspension du premier ensemble E1, les parties de réception recevant une portion inférieure du deuxième tube 22
-/C/ assemblage du premier ensemble E1 et du deuxième ensemble E2 par la mise en place :
- /C1/ des deux premiers supports de fixation 40, 41, fixés respectivement aux premiers supports latéraux 33,34, gauche et droite, les deux premiers supports de fixation, comportant chacun deux pattes de fixation Pa1, Pa2, fixées à un premier support latéral (33 ou 34); les deux pattes prolongeant la portion arquée Ac, une partie concave, inférieure de la portion arquée formant un logement supérieur pour une portion supérieure du premier tube 21, le premier tube étant maintenu pincé entre deux couples premier support latéral et premier support de fixation, respectivement à droite et gauche du châssis supérieur,
- /C2/ des deux deuxièmes supports de fixation 42, 43, fixés respectivement aux deuxièmes supports latéraux 35, 36, gauche et droite, les deux deuxièmes supports de fixation, comportant chacun deux pattes de fixation Pa1, Pa2 fixées à un deuxième support latéral prolongeant une portion arquée, une partie concave, inférieure de la portion arquée formant un logement supérieur pour une portion supérieure du deuxième tube 22, le deuxième tube étant maintenu pincé entre deux couples deuxième support latéral et deuxième support de fixation, respectivement à droite et gauche du châssis supérieur.

Comme visible à la figure 7, la fixation entre les pattes Pa1 et Pa2 du support de fixation (premier ou deuxième 40 à 43) et le support latéral (premier ou deuxième33 à 36) peut être assurée par la mise en place des organes de fixation 6, 7, et en particulier des vis traversant les pattes et le support, à savoir deux organes de fixation 5 ou 6 tels que des vis, respectivement entre les pattes de fixation Pa1, Pa2 du support de fixation (premier ou deuxième) et le support latéral (premier et deuxième), de part et d'autre du tube (premier et deuxième 21 et 22.

Éventuellement et selon un mode de réalisation, l'assemblage du premier ensemble et du deuxième ensemble comporte successivement à /C2/ la mise en œuvre de soudure S1, S2 entre les deuxièmes supports de fixation 42, 43 et le deuxième tube 22 et/ou entre les premiers supports de fixation 40,41 et le premier tube 21. Les soudures S1 et/S2 permettent d'éviter le glissement du tube dans les couples supporta aux latéraux/supports de fixation, suivant l'axe longitudinal du tube.

Le kit selon la présente divulgation permet une obtention rapide du siège suspendu par le procédé décrit, tout en autorisant, le cas échéant une conception du siège autorisant le réglage de l'inclinaison du châssis d'assise 20 et dont de l'assise 2, et notamment conjointement du dossier 8, par pivotement du châssis d'assise 20 et conjointement du dossier 8 autour de l'axe transversal du deuxième tube 22.

Nous décrivons ainsi si après des modes de réalisations possibles du siège/kit de siège selon la présente divulgation.

De manière générale, et tel qu'illustré à la figure 2, le châssis supérieur 30, peut comprend un cadre comprenant, d'une part, deux longerons, notamment de sous forme de profilé de section en U, orientés suivant la direction X, formant notamment des chemins de roulement pour les galets du mécanisme 32, et deux traverses, avant et arrière, reliant les deux longerons entre eux.

Les premiers supports latéraux 33, 34, et les deuxièmes supports latéraux 35, 36 sont des supports fixés aux longerons, et saillants vers l'extérieur selon la direction transversale Y. Les supports latéraux 33, 34 (ou 35, 36) peuvent être constitués chacun d'une tôle d'un seul tenant conformée comportant une partie de fixation sur un longeron, d'une part, et sur sa paroi supérieure, la partie de réception pour une portion inférieure du tube (premier ou deuxième tube 21,22), d'autre part.

De manière générale et selon un mode de réalisation,
- les parties de réception des premiers supports latéraux 33, 34 configurées pour la réception d'une portion inférieure du premier tube 21, à gauche et droite du châssis supérieur 30 comprennent des logements inférieur Li recevant la portion inférieure du premier tube et/ou
- les parties de réception des deuxièmes supports latéraux 35, 36 configurées pour la réception d'une portion inférieure du deuxième tube 22, à gauche et à droite du châssis supérieur 30 comprennent des logements inférieurs Li recevant la portion inférieure du deuxième tube.

Ce logement inférieur Li peut être typiquement obtenu par une conformation de la tôle formant le support latéral (premier et/ou deuxième 33 à 36), et selon une portion concave arquée, complémentaire à la section extérieure des tubes (premier et deuxième), en particulier lorsque le tube est fixe, voire complémentaire à un coussinent CS sous forme d'une bague entre la surface du tube et le couple support latéral/support de fixation. Ce logement permet le centrage du tube sur la partie de réception suivant la direction X

Le châssis d'assise 20 comporte les deux flasques 200, 201, gauche et droite, constitués par le premier flasque 200 et un deuxième flasque 201 qui sont maintenus écartés selon la direction transversale Y par les entretoises du châssis d'assise. Selon un mode de réalisation, le deuxième tube 22 arrière constitue l'une des entretoises, au niveau de l'arrière du châssis d'assise 20.

Selon un mode de réalisation avantageux, l'assise 2 peut être d'inclinaison réglable par rapport au châssis supérieur 30, par rotation des flasques 200, 201 autour de l'axe longitudinal du deuxième tube 22, arrière. En particulier, le deuxième tube 22 peut être maintenu rigidement fixé entre les deux couples deuxième support latéral 35, 36 et deuxième support de fixation 42, 43, respectivement, à gauche et droite, du châssis supérieur 30, sans possibilité de rotation du deuxième tube 22. Une première extrémité 220 du deuxième tube 22 est alors montée pivotante dans un alésage d'un premier flasque 200 et une deuxième extrémité 221 est alors montée pivotante un alésage d'un deuxième flasque 201.

Ainsi, le châssis d'assise 20, y compris les deux flaques 200, 201 et la traverse avant 202 est d'inclinaison réglable par pivotement des première et deuxième extrémités 220, 221 du deuxième tube 2 par rapport aux flasques 200, 201 premier et deuxième flasques.

Éventuellement une première soudure S1 entre le deuxième support de fixation 42, gauche, et le deuxième tube 22, ainsi qu'une deuxième soudure S2 entre le deuxième support de fixation 43, droite, et le deuxième tube 22, permettent de verrouiller la position du deuxième tube suivant la direction transversale Y.

Selon un mode de réalisation illustré à titre indicatif à la figure 5
- la première extrémité 220 du deuxième tube 22 traversant l'alésage du premier flasque comporte un première déformation radiale 2220 et une deuxième déformation radiale 2221, de part et d'autre du premier flasque 200 constituant des butées pour le flasque,
- la deuxième extrémité 221 du deuxième tube traversant l'alésage du deuxième flasque comporte une première déformation radiale et une deuxième déformation radiale, de part et d'autre du deuxième flasque 201 constituant des butées pour le flasque.

Ces déformations radiales permettent d'assujettir le deuxième tube aux flasques par les techniques de formage d'extrémité (en anglais « end forming »)

Selon un mode de réalisation :
- le premier flasque 200 est monté pivotant par rapport au deuxième tube 22 par l'intermédiaire 'd'une bague de glissement B comportant un corps scellé sur le premier flasque 200, ainsi qu'un revêtement configuré pour glisser sur le deuxième tube,
- le deuxième flasque 201 est monté pivotant par rapport au deuxième tube 22 par l'intermédiaire 'd'une bague de glissement B comportant un corps scellé sur le deuxième flasque 201, ainsi qu'un revêtement configuré pour glisser sur le deuxième tube.

Le revêtement interne de la bague B présente un coefficient de frottement inférieur à celui du corps, et comprend par exemple polytétrafluoroéthylène (PTFE) connu sous la marque déposée Teflon.

Selon un mode de réalisation, le siège 1 peut comprendre un système 7 de réglage de l'inclinaison de l'assise autour de l'axe longitudinal du deuxième tube 22. Le système de réglage 7 peut comporter ledit premier tube 21, monté pivotant, autour de son axe longitudinal, par rapport aux couples premier support latéral 33, 34 et premiers supports de fixation 40,41, et respectivement à gauche et droite du châssis supérieur 30.

Le système de réglage 7 peut encore comporter :
- un troisième tube 23 formant une entretoise entre les deux flasques, le troisième tube 23 monté pivotant par rapport auxdits flasques, premier et deuxième flasques 200, 201,
- une première liaison ciseaux reliant le premier tube 21 au troisième tube 23, le système 7 de réglage comportant une premier bielle BL1, solidaire en rotation du premier tube 21 et une deuxième bielle BL2, articulée en pivot à la première bielle selon un premier axe transversal, au niveau d'une première extrémité de la deuxième bielle, la deuxième bielle BL2 étant liée en rotation avec le troisième tube 23 au niveau d'une deuxième extrémité de la deuxième bielle LB2,
- une deuxième liaison ciseaux reliant le premier tube 21 au troisième tube 23 comportant une troisième bielle BL3, solidaire du premier tube 21 et une quatrième bielle LB4, articulée en pivot à la troisième bielle LB3 selon le premier axe transversal, au niveau d'une première extrémité, la quatrième bielle LB4 étant liée en rotation au troisième tube 23 au niveau d'une deuxième extrémité de la quatrième bielle LB4,
- un actionneur, assurant un déploiement des première et deuxième liaisons ciseaux, par entrainement en rotation du troisième tube 23 par rapport au flasque 200 et 201 et conjointement actionnement en rotation du premier tube par rapport aux couples premier support latéral et premier support de fixation sous l'action des première et deuxième liaison ciseaux.

L'actionneur peut être un mécanisme à actionneur manuel, ou alternativement motorisé, qui assure une rotation du troisième tube, dans un premier sens ou dans un deuxième sens, et ainsi provoque le déploiement des première et deuxième liaisons ciseaux pour incliner vers l'arrière le châssis et le dossier autour de l'axe du deuxième tube, ou inversement, pour rétracter les première et deuxième liaisons ciseaux pour l'incliner l'assise vers l'avant. Lorsque les première et deuxième liaisons ciseaux se déploient ou se rétractent le premier tube 21 pivote autour de son axe, de préférence par glissement dans les coussinets CS pincés par les premiers supports latéraux 33, 34 et premiers supports de fixation 40, 41.

En particulier, l'actionneur peut comporter un mécanisme de réglage irréversible comportant :
- un support monté sur un flasque constitué par le premier flasque 200 ou le deuxième flasque 201
- un organe d'entrée Oe, monté pivotant par rapport au support autour d'un axe de rotation Y1, sollicité élastiquement vers une position de repos, déplaçable manuellement selon un premier sens, dans un premier secteur angulaire, et selon un second sens, dans un deuxième secteur angulaire système de réglage.

Un tel mécanisme est connu en soi, par exemple connu du document FR 2.809.355 de la présente Demanderesse. Ledit mécanisme de réglage est configuré pour incliner l'assise vers l'arrière lorsque l'organe d'entrée Oe est éloigné de sa position de repos selon un premier sens et pour incliner l'assise vers l'avant lorsque l'organe d'entrée est éloigné de sa position de repos suivant le deuxième sens. Un organe de sortie Os, monté pivotant autour de l'axe de rotation.

Un système d'entrainement et de blocage est alors configuré pour assurer l'entraînement de l'organe de sortie Os par l'organe d'entrée Oe lorsque l'organe d'entrée est déplacé en s'éloignant de sa position de repos selon le premier sens, ou encore selon le second sens et configuré pour bloquer la rotation de l'organe de sortie lorsque l'organe d'entrée retourne vers sa position de repos.

De manière générale, l'organe de sortie de l'actionneur, et par exemple l'organe de sortie du mécanisme de réglage irréversible comporte un pignon Pg engrenant avec un secteur denté SD et couplé en rotation au troisième tube 23 pour assurer son entrainement en rotation.

D'une manière générale le première mode de réalisation divulgue un dispositif de fixation comportant un système de liaison mécanique reliant ledit au moins un tube 21,22 et lesdits au moins deux supports latéraux 33, 34,35, 36 configuré pour assurer une fixation de l'assise au système de suspension 3 de manière indépendante des flasques 200, 201, et plus particulièrement par une fixation directe dudit au moins un tube, en particulier premier tube 21, et deuxième tube 22, respectivement contre les supports latéraux, et en particulier fixation directe du premier tube 21, avant, sur les premiers supports latéraux 33, 34, droite et gauche, et fixation directe du deuxième tube 22, arrière, sur les deuxièmes supports latéraux 356, 36, droite et gauche.

### Généralisation et deuxième mode de réalisation (Figures 12 à 17)

La présente divulgation couvre également un deuxième mode de réalisation pour lequel le système de liaison mécanique assure une fixation indirecte du premier tube 21 et du deuxième tube 22 par l'intermédiaire de brides de fixation 210, 211, 220, 221.

De manière générale, le dispositif de suspension 3 qui a déjà été décrit, pour le premier mode de réalisation, peut présenter les mêmes caractéristiques, et n'est donc pas redéveloppé.

Le châssis supérieur du dispositif de suspension 3 présente également des supports latéraux 33, 34, 35,36, qui peuvent différer par rapport au premier mode de réalisation en ce que ceux-ci sont conçus pour recevoir, non par directement les tubes 21, 22, mais des brides de fixations solidaires des tubes.

Que ce soit le premier mode de réalisation ou le deuxième mode de réalisation, la fixation du châssis supérieur 30 du dispositif de suspension à l'assise, n'est pas obtenue par solidarisation directe des flasques 200, 201 au châssis supérieur 30, mais seulement par une fixation indirecte reliant les tubes 21 22 au châssis supérieur 30.

Une telle solution de fixation entre le châssis d'assise 20 et le châssis supérieur 30, indirecte par les tubes, est avantageusement en ce qu'elle représente une solution modulaire universelle qui peut être partagée pour une grande variété de conception d'assise et de châssis d'assise, et comme visible à la figure 16.

En particulier, à la figure 16 les trois châssis d'assise partagent une même conception des tubes et brides de fixation, alors que les autres composants structurels en particulier les flasques présentent des différences notables de forme.

Autrement dit, il n'est pas nécessaire de développer un dispositif de fixation spécifique aux flasques des différents châssis d'assise.

Ainsi, le siège de véhicule selon la présente divulgation comprend :
- ladite assise 2 comprenant le châssis d'assise 20, s'étendant entre le bord arrière et le bord avant suivant une direction longitudinale X, et entre un premier bord latéral à un deuxième bord latéral suivant une direction transversale Y, le châssis d'assise 20 comportant les deux flasques 200, 201, gauche et droite, constitués par le premier flasque 200 et le deuxième flasque 201 qui sont maintenus écartés selon la direction transversale Y par les entretoises du châssis d'assise,
- le système de suspension 3 intercalé entre le châssis d'assise et le plancher du véhicule, comportant le châssis supérieur 30 et le châssis inférieur 31 entre lesquels est interposé un mécanisme 32 comportant un organe de suspension élastique configuré pour autoriser un débattement du châssis supérieur par rapport au châssis inférieur,
-.le dispositif de fixation de l'assise au système de suspension 3 comprenant:
   -- ledit au moins un tube 21,22 solidaire de l'assise s'étendant suivant la direction transversale Y, comprenant en particulier un tube avant et/ou un tube arrière, formant lesdites entretoises entre les deux flasques 200, 201
   -- lesdits au moins deux supports latéraux 33, 34 ; 35, 36 solidaires du châssis supérieur, positionnés à gauche et droite latéralement du châssis supérieur,
   - et de manière générale, le système de liaison mécanique reliant ledit au moins un tube 21,22 et lesdits au moins deux supports latéraux 33, 34,35, 36 configuré pour assurer une fixation de l'assise au système de suspension 3 de manière indépendante des flasques 200, 201 .

Selon le deuxième mode de réalisation, le système de liaison mécanique comprend au moins deux brides de fixation, droite et gauche, solidaires dudit au moins un tube 21,22, lesdits au moins deux brides de fixation 210,211, 220, 221 étant saillantes sur le dessous du châssis d'assise, et configurées pour se fixer respectivement avec lesdits au moins deux supports latéraux 33, 34, 35, 36, droite et gauche.

En particulier, ledit au moins un tube peut comprendre un premier tube 21, avant et un deuxième tube 22, arrière solidaires de l'assise s'étendant respectivement suivant la direction transversale Y, en entretoisant les deux flasques 200, 201. Tout ou partie des deux tubes 21, 22 peuvent être soudés par leurs deux extrémités aux deux flasques.

Lesdits au moins deux supports latéraux comprennent deux premiers supports latéraux 33,34, avants, solidaires du châssis supérieur, positionnés à gauche et droite, latéralement du châssis supérieur et deux deuxièmes supports latéraux 35, 36, arrières, solidaires du châssis supérieur 3, positionnés à gauche et à droite latéralement au châssis supérieur 30.

En particulier, le système de liaison mécanique comprend deux premières brides de fixation 210,211, droite et gauche, solidaires dudit tube avant 21 fixées respectivement auxdits deux premiers supports latéraux 33, 34, droite et gauche, et deux deuxièmes brides de fixation 220, 221, droite et gauche, solidaires dudit tube arrière 22 fixées respectivement auxdits deux deuxièmes supports latéraux (35, 36), droite et gauche.

De manière générale, les deux brides de chaque couple 33 et 34 pour le couple avant, et 35 et 36 pour le couple arrière, peuvent être symétriques par rapport à un plan vertical perpendiculaire aux tubes 21,22.

D'une manière générale, lesdites au moins deux brides de fixation 210,211, 220, 221 peuvent être des tôles prédécoupées et pliées.

De manière générale, lesdits au moins un deux supports latéraux 33, 34 ; 35, 36 en particulier les premiers supports latéraux 33, 34, et les deuxièmes supports latéraux 35, 36 sont les supports fixés aux longerons, et saillants vers l'extérieur selon la direction transversale Y, par exemple constitués chacun d'une tôle d'un seul tenant conformée, en particulier de forme en U.

Ledit système de liaison mécanique comporte un mode de fixation amovible, entre les brides de fixation 210,211, 220, 221 et lesdits supports latéraux 33, 34,35, 36.

Selon un mode de réalisation, en particulier à la figure 15, des systèmes vis/écrou, comprenant au moins une vis traversant des alésages en regard entre, d'une part, une des brides de fixation, et l'un des supports latéraux.

À cet effet, chaque couple bride de fixation/support latéral peuvent présenter des alésages mutuellement en regard traversés par une vis.

Le mode de fixation amovible peut encore comprendre des boucles rigides, solidaires des supports latéraux, et des verrous VR configurés pour accrocher et verrouiller de préférence automatiquement, les boucles BCL.

Le verrou comprend un corps pourvu d'une fente de verrouillage, et un organe mobile de retenue, interne au corps, configuré pour accrocher automatiquement la boucle lors d'une insertion de la boucle, dans ladite fente de verrouillage. L'organe de retenue peut être de verrouillable par déplacement de l'organe de retenue depuis une position de fermeture jusqu'à une position d'ouverture.

De manière générale, la présente divulgation kit convenant pour l'obtention d'un siège selon la présente divulgation comportant à l'état désassemblé :
/a/ le premier ensemble E1 comportant un système de suspension comportant le châssis supérieur 30 et le châssis inférieur 31 entre lesquels est interposé un mécanisme comportant un organe de suspension élastique et au moins deux supports latéraux 33,34,35,36 solidaires du châssis supérieur 30, positionnés à droite et gauche latéralement au châssis supérieur 30, et en particulier deux premiers supports 33, 34 avants, et deuxièmes supports latéraux 35, 36, arrières /b/ un deuxième ensemble E2, autoportant présentant ladite assise 2 comprenant le châssis d'assise 20, s'étendant entre un bord arrière et un bord avant suivant une direction longitudinale X, et entre le premier bord latéral au deuxième bord latéral suivant une direction transversale Y, comprenant au moins ledit au moins un tube 21,22 appartenant à l'assisse s'étendant suivant la direction transversale Y, entretoisant les deux flasques 200, 201 dudit châssis supérieur, et en particulier le tube avant 21 et :le tube arrière 22.

De manière générale le kit comprend le système de liaison mécanique reliant ledit au moins un tube 21,22 et lesdits au moins deux supports latéraux 33, 34, 35, 36 configuré pour assurer une fixation de l'assise au système de suspension de manière indépendante des flasques.

Selon le deuxième mode de réalisation, le système de liaison mécanique comprend au moins deux brides de fixation, droite et gauche, solidaires dudit au moins un tube 21,22, lesdits au moins deux brides de fixation 210,211, 220, 221 étant saillantes sur le dessous du châssis d'assise, et configurées pour se fixer respectivement avec lesdits au moins deux supports latéraux 33, 34, 35, 36.

En particulier le système de liaison mécanique peut comprendre les deux premières brides de fixation 210, 211, droite et gauche, avants, configurées pour se fixer respectivement sur les premiers supports latéraux 33, 34) et deux deuxièmes brides de fixation 220, 221, droite et gauche, arrières, configurées pour se fixer respectivement sur les deuxièmes supports latéraux 35,36.

La présente divulgation concerne encore un procédé d'assemblage d'un siège selon le deuxième mode de réalisation de la présente divulgation à partir d'un kit comprenant :
- /A/ positionnement des premières brides de fixation 210, 211 du premier tube 21 de l'assise 2 du deuxième ensemble E2 contre les premiers supports latéraux 33,34 du système de suspension du premier ensemble E1,
- /B/ positionnement des deuxièmes brides de fixation 220, 221 du deuxième tube 22 de l'assise du deuxième ensemble contre les deuxièmes supports latéraux 35, 36 du système de suspension du premier ensemble E1,
-/C/ assemblage du premier ensemble E1 et du deuxième ensemble E2 par solidarisation des premières brides de fixation 210, 211 sur les premiers supports latéraux 33, 34 et par solidarisation des deuxièmes brides de fixation 220,221 sur les deuxièmes supports latéraux 35, 36.

### Nomenclature.

1. Siège,
E2. Deuxième ensemble :
2. Assise,
20. Châssis d'assise,
21. Premier tube (avant),
210, 211 Brides de fixation (droite et gauche, avant) mode de réalisation des figures 12 à 17)
22. Deuxième tube (arrière),
220, 221. Brides de fixation (droite et gauche, arrière) mode de réalisation des figures 12 à 17.
23. Troisième tube
200, 201. Premier et deuxième flasques,
203. Traverse (avant)
220, 221. Première extrémité et deuxième extrémité (du deuxième tube montées respectivement en pivot dans des ouvertures des flasques),
2200, 2201. Première et deuxième déformations radiales
7. système de réglage de l'inclinaison de l'assise autour de l'axe longitudinal du deuxième tube,
8. Dossier,
80 Châssis de dossier,
800, 801. Flasques de dossier (premier et deuxième),
BL1, BL2, BL3, BL4. Première, deuxième, troisième et quatrième bielles,
Oe, Os. Organe d'entrée et organe de sortie (mécanisme de réglage irréversible)

E1 Premier ensemble :
3. Système de suspension,
30. Châssis supérieur,
31. Châssis inférieur,
32. Mécanisme (comportant un organe de suspension élastique)
33, 34. Premiers supports latéraux,
35, 36. Deuxièmes supports latéraux,
Autres
40, 41. Premiers supports de fixation,
42, 43. Deuxièmes supports de fixation
5, 6. Organes de fixation
Ac. Portion arquée
B. bagues de glissement
Li. Logements inférieurs,
Ls. Logements supérieurs,
Pa1, Pa2. Pattes de fixation,
S1, S2. Soudures,
VR. Verrou,
BCL. Boucle.

## Revendications

1. Siège de véhicule automobile, suspendu, comprenant
- une assise (2) comprenant un châssis d'assise (20), s'étendant entre un bord arrière et un bord avant suivant une direction longitudinale X, et entre un premier bord latéral à un deuxième bord latéral suivant une direction transversale Y, le châssis d'assise (20) comportant deux flasques (200, 201), gauche et droite, constitués par un premier flasque (200) et un deuxième flasque (201) qui sont maintenus écartés selon la direction transversale Y par des entretoises du châssis d'assise,
- un système de suspension (3) intercalé entre le châssis d'assise et le plancher du véhicule, comportant un châssis supérieur (30) et un châssis inférieur (31) entre lesquels est interposé un mécanisme (32) comportant un organe de suspension élastique configuré pour autoriser un débattement du châssis supérieur par rapport au châssis inférieur
- un dispositif de fixation de l'assise au système de suspension (3) **caractérisé en ce que** le dispositif de fixation au système de suspension comprend :
-- au moins un tube (21,22) solidaire de l'assise s'étendant suivant la direction transversale Y, comprenant en particulier un tube avant et/ou un tube arrière, formant lesdites entretoises entre les deux flasques (200, 2001)
-- au moins deux supports latéraux (33, 34 ; 35, 36) solidaires du châssis supérieur, positionnés à gauche et droite latéralement du châssis supérieur,
et un système de liaison mécanique reliant ledit au moins un tube (21,22) et lesdits au moins deux supports latéraux (33, 34,35, 36), configuré pour assurer une fixation de l'assise au système de suspension (3) de manière indépendante des flasques (200, 201).

2. Siège de véhicule selon la revendication 1 dans lequel le système de liaison mécanique comprend au moins deux brides de fixation, droite et gauche, solidaires dudit au moins un tube (21,22), lesdits au moins deux brides de fixation (210,211, 220, 221) étant saillantes sur le dessous du châssis d'assise, et configurées pour se fixer respectivement avec lesdits au moins deux supports latéraux (33, 34, 35, 36), droite et gauche.

3. Siège de véhicule selon la revendication 2, dans lequel lesdites au moins deux brides de fixation (210,211, 220, 221) sont des tôles prédécoupées et pliées.

4. Siège de véhicule selon la revendication 2 ou 3, ledit système de liaison mécanique comportant un mode de fixation amovible, entre les brides de fixation (210,211, 220, 221) et lesdits supports latéraux (33, 34,35, 36) comprenant tout ou partie des éléments suivants :
- des systèmes vis/écrou, comprenant au moins une vis traversant des alésages en regard entre, d'une part, une des brides de fixation, et l'un des supports latéraux, et/ou
- des boucles rigides, solidaires des supports latéraux, et des verrous configurés pour accrocher et verrouiller de préférence automatiquement les boucles, le verrou comprenant un corps pourvu d'une fente de verrouillage, et un organe mobile de retenue, interne au corps, configuré pour accrocher la boucle lors d'une insertion de la boucle, dans ladite fente de verrouillage.

5. Siège selon l'une des revendications 2 à 4, dans lequel :
- ledit au moins un tube comprend un premier tube (21), avant, et un deuxième tube (22), arrière, solidaires de l'assise s'étendant suivant la direction transversale Y, en entretoisant les deux flasques (200, 201),
- lesdits au moins deux supports latéraux comprennent deux premiers supports latéraux (33,34), avants, solidaires du châssis supérieur, positionnés à gauche et droite latéralement du châssis supérieur,
- lesdits au moins deux supports latéraux comprennent deux deuxièmes supports latéraux (35, 36),arrières, solidaires du châssis supérieur (30), positionnés à gauche et à droite latéralement au châssis supérieur (30),
et dans lequel le système de liaison mécanique comprend deux premières brides de fixation (210,211), droite et gauche, solidaires dudit tube avant (21) fixées respectivement auxdits deux premiers supports latéraux (33, 34), droite et gauche,
et deux deuxièmes brides de fixation (220, 221), droite et gauche, solidaires dudit tube arrière (22) fixées respectivement auxdits deux deuxièmes supports latéraux (35, 36), droite et gauche.

6. Siège selon l'une des revendications 1 à 5 dans lequel le châssis supérieur (30), comprend un cadre comprenant, d'une part, deux longerons (L), deux traverses, avant et arrière, reliant les deux longerons entre eux, et dans lequel lesdits au moins un deux supports latéraux (33, 34 ; 35, 36) en particulier des premiers supports latéraux (33, 34), et des deuxièmes supports latéraux (35, 36) sont des supports fixés aux longerons, et saillants vers l'extérieur selon la direction transversale Y, par exemple constitués chacun d'une tôle d'un seul tenant conformée.

7. Siège de véhicule automobile, suspendu, selon la revendication 1 ou 6, dans lequel-.ledit dispositif de fixation de l'assise au système de suspension (3) comprend :
-- ledit au moins un tube (21,22) solidaire de l'assise s'étendant suivant la direction transversale Y,
-- lesdits au moins deux supports latéraux (33, 34 ; 35, 36) solidaires du châssis supérieur, positionnés à gauche et droite, latéralement du châssis supérieur,
et dans lequel ledit système de liaison mécanique comprend :
-- lesdites au moins deux supports latéraux (33, 34 ; 35, 36) comportant respectivement au niveau d'une paroi supérieure des parties de réception configurées pour la réception d'une portion inférieure dudit au moins un tube (21,22) à droite et à gauche du châssis supérieur (30),
-- au moins deux premiers supports de fixation (40, 41 ; 42, 43), gauche et droite, amovibles, fixés respectivement auxdits au moins deux supports latéraux (33, 34 ; 35, 36), gauche et droite, comportant chacun deux pattes de fixation (Pa1, Pa2), fixées à l'un des deux supports latéraux, les deux pattes de fixation étant prolongées par une portion arquée (Ac), intermédiaire, formant une partie concave, inférieure de la portion arquée, ladite partie concave formant un logement supérieur (Ls) pour une portion supérieure dudit au moins un tube, ledit au moins un tube (21, 22) étant maintenu entre deux couples support latéral support de fixation, respectivement à droite et gauche du châssis supérieur.

8. Siège de véhicule automobile, suspendu, selon la revendication 7 dans lequel :
-- ledit au moins un tube comprend un premier tube (21), avant et un deuxième tube (22), arrière solidaires de l'assise s'étendant suivant la direction transversale Y,
--- lesdits au moins deux supports latéraux comprennent deux premiers supports latéraux (33,34) solidaires du châssis supérieur, avants, positionnés à gauche et droite latéralement du châssis supérieur, les deux premiers supports latéraux (33, 34) comportant respectivement au niveau d'une paroi supérieure des parties de réception configurées pour la réception d'une portion inférieure du premier tube (21), à droite et à gauche du châssis supérieur (30),
-- lesdits au moins deux supports de fixation comprennent deux premiers supports de fixation (40, 41), gauche et droite, amovibles, fixés respectivement aux premiers supports latéraux (33, 34), gauche et droite, les deux premiers supports de fixation (40, 41) comportant chacun deux pattes de fixation (Pa1, Pa2), fixées à l'un des deux premiers supports latéraux, les deux pattes de fixation étant prolongées par une portion arquée (Ac), intermédiaire, formant une partie concave, inférieure de la portion arquée formant un logement supérieur (Ls) pour une portion supérieure du premier tube, le premier tube étant maintenu entre deux couples premier support latéral et premier support de fixation, respectivement à droite et gauche du châssis supérieur,
-- lesdits au moins deux supports latéraux comprennent deux deuxièmes supports latéraux (35, 36) solidaires du châssis supérieur (30), arrières, positionnés à gauche et à droite latéralement au châssis supérieur (30), les deux deuxièmes supports latéraux comportant respectivement au niveau d'une paroi supérieure des parties de réception configurées pour la réception d'une portion inférieure du deuxième tube, à droite et à gauche du châssis supérieur,
- lesdits au moins deux supports de fixation comprennent deux deuxièmes supports de fixation, droite et gauche, amovibles, fixés respectivement aux deuxièmes supports latéraux (42, 43), droite et gauche, les deux deuxièmes supports de fixation, comportant chacun deux pattes de fixation (Pa1, Pa2), fixées à l'un des deuxièmes supports latéraux, les deux pattes de fixation (Pa1, Pa2) étant prolongées par une portion arquée (Ac) comportant une partie concave, inférieure de la portion arquée formant un logement supérieur (Ls) pour une portion supérieure du deuxième tube (22), le deuxième tube étant maintenu entre deux couples deuxième support latéral et deuxième support de fixation, respectivement à droite et gauche du châssis supérieur.

9. Siège selon la revendication 7 ou 8, dans lequel lesdits au moins deux supports de fixation (40,41,42,43) sont fixés audit au moins deux supports latéraux (32, 33, 33, 34) par des organes de fixation (5,6) tels que vis traversant des alésages des pattes de fixation et des alésages correspondants dans les supports latéraux, en particulier les premiers supports de fixation (40, 41) sont fixés aux premiers supports latéraux (33, 34) et/ou les deuxièmes support de fixation (42, 43) sont fixés aux deuxièmes supports latéraux (35, 36), par des organes de fixation (5,6) tels que vis traversant des alésages des pattes de fixation et des alésages correspondant dans les supports latéraux, premiers supports latéraux et/ou deuxième support latéraux.

10. Siège selon la revendication 8 seule ou en combinaison avec la revendication 9, dans lequel le châssis d'assise (20) comporte les deux flasques (200, 201), gauche et droite, constitués par le premier flasque (200) et le deuxième flasque (201) qui sont maintenus écartés selon la direction transversale Y par les entretoises du châssis d'assise, et dans lequel le deuxième tube (22) arrière constitue l'une des entretoises, au niveau de l'arrière du châssis et dans lequel l'assise (2) est d'inclinaison réglable par rapport au châssis supérieur (20), par rotation des flasques (200, 201) autour de l'axe longitudinal du deuxième tube (22), arrière et par exemple le deuxième tube (22) est maintenu rigidement fixé entre les deux couples deuxième support latéral (35, 36) et deuxième support de fixation (42, 43), respectivement à gauche et droite du châssis supérieur (30), sans possibilité de rotation du deuxième tube (22) par rapport au châssis supérieur (30), et dans lequel une première extrémité (220) du deuxième tube (22) est montée pivotante dans un alésage d'un premier flasque (200) et une deuxième extrémité (221) est montée pivotante un alésage d'un deuxième flasque (201).

11. Siège selon la revendication 10 comprenant un système '(7) de réglage de l'inclinaison de l'assise autour de l'axe longitudinal du deuxième tube (22), système de réglage (7) comportant ledit premier tube (21), monté pivotant, autour de son axe longitudinal, par rapport aux couples premier support latéral (33,34) et premiers supports de fixation (40,41), et respectivement à gauche et droite du châssis supérieur (30), le système de réglage (7) comportant :
- un troisième tube (23) formant une entretoise entre les deux flasques, le troisième tube (23) monté pivotant par rapport auxdits flasques, premier et deuxième flasques (200, 201),
- une première liaison ciseaux reliant le premier tube (21) au troisième tube (23) , le système (7) de réglage comportant une première bielle (BL1), solidaire en rotation du premier tube (21) et une deuxième bielle (BL2), articulée en pivot à la première bielle selon un premier axe transversal, au niveau d'une première extrémité de la deuxième bielle, la deuxième bielle (BL2) étant liée en rotation avec le troisième tube (23) au niveau d'une deuxième extrémité de la deuxième bielle,
- une deuxième liaison ciseaux reliant le premier tube (21) au troisième tube (23) comportant une troisième bielle (BL3), solidaire du premier tube (21) et une quatrième bielle (BL4), articulée en pivot à la troisième bielle (BL3 )selon le premier axe transversal, au niveau d'une première extrémité, la quatrième bielle (BL4) étant liée en rotation au troisième tube (23) au niveau d'une deuxième extrémité de la quatrième bielle,
- un actionneur, assurant un déploiement des première et deuxième liaisons ciseaux, par entrainement en rotation du troisième tube '(23) par rapport au flasque (200 et 201) et conjointement actionnement en rotation du premier tube par rapport aux couples premier support latéral et premier support de fixation.

12. Kit convenant pour l'obtention d'un siège selon l'une des revendications 1 à 11 comportant à l'état désassemblé :
/a/ un premier ensemble (E1) comportant un système de suspension comportant un châssis supérieur (30) et un châssis inférieur (31) entre lesquels est interposé un mécanisme comportant un organe de suspension élastique et au moins deux supports latéraux (33,34,35,36) solidaires du châssis supérieur (30), positionnés à droite et gauche latéralement au châssis supérieur (30), et en particulier deux premiers supports (33, 34) avants, et deuxièmes supports latéraux (35, 36), arrières /b/ un deuxième ensemble (E2), autoportant présentant une assise (2) comprenant un châssis d'assise (20), s'étendant entre un bord arrière et un bord avant suivant une direction longitudinale X, et entre un premier bord latéral à un deuxième bord latéral suivant une direction transversale Y, comprenant au moins un tube (21,22) appartenant à l'assisse s'étendant suivant la direction transversale Y, entretoisant deux flasques (200, 201) dudit châssis supérieur, et en particulier un tube avant (21) et un tube arrière (22),
un système de liaison mécanique reliant ledit au moins un tube (21,22) et lesdits au moins deux supports latéraux configuré pour assurer une fixation de l'assise au système de suspension de manière indépendante des flasques .

13. Kit selon la revendication 12, convenant pour l'obtention d'un siège 2 à 6, dans lequel ledit système de liaison mécanique comprend au moins deux brides de fixation, droite et gauche, solidaires dudit au moins un tube (21,22), lesdits au moins deux brides de fixation (210,211, 220, 221) étant saillantes sur le dessous du châssis d'assise, et configurées pour se fixer respectivement avec lesdits au moins deux supports latéraux (33, 34, 35, 36), et en particulier deux premières brides de fixation (210, 211), droite et gauche, avant, configurées pour se fixer respectivement sur les .premiers supports latéraux (33, 34) et deux deuxièmes brides de fixation (220, 221), droite et gauche, arrière, configurées pour se fixer respectivement sur les deuxièmes supports latéraux (35,36).

14. Procédé d'assemblage d'un siège selon la revendication 2 seule ou prise en combinaison avec l'une des revendications 3 à 6 à partir d'un kit selon la revendication 13 comprenant :
- /A/ positionnement des premières brides de fixation (210, 211) du premier tube (21) de l'assise (2) du deuxième ensemble (E2) contre les premiers supports latéraux (33,34) du système de suspension du premier ensemble (E1),
- /B/ positionnement des deuxièmes brides de fixation (220, 221) du deuxième tube (22) de l'assise du deuxième ensemble contre les deuxièmes supports latéraux (35, 36) du système de suspension du premier ensemble (E1),
-/C/ assemblage du premier ensemble (E1) et du deuxième ensemble (E2) par solidarisation des premières brides de fixation (210, 211) sur les premiers supports latéraux (33, 34) et par solidarisation des deuxièmes brides de fixation (220,221) sur les deuxièmes supports latéraux (35, 36).
